# EUROPEAN PATENT SPECIFICATION

(11) **EP 3 980 188 B1**
(45) Date of publication and mention of the grant of the patent: **02.12.2026**
(21) Application number: 20730627.5
(22) Date of filing: 04.06.2020
(51) Int. Cl.: B03C 5/00, B03C 5/02, B01L 3/00, B60S 1/02, F04B 19/00, G02B 27/00

(54) **DEVICE FOR MANIPULATING A SUBSTANCE, VEHICLE AND ASSEMBLY COMPRISING THE SAME, AND METHOD OF USING THE DEVICE**
VORRICHTUNG ZUM MANIPULIEREN EINER SUBSTANZ, FAHRZEUG UND ANORDNUNG MIT DIESER VORRICHTUNG UND VERFAHREN ZUR VERWENDUNG DER VORRICHTUNG
DISPOSITIF DE MANIPULATION D'UNE SUBSTANCE, VÉHICULE ET ENSEMBLE LE COMPRENANT, ET PROCÉDÉ D'UTILISATION DU DISPOSITIF

(30) Priority: 05.06.2019 GB 201907986; 05.06.2019 GB 201907987
(43) Date of publication of application: 13.04.2022
(73) Proprietor: Jaguar Land Rover Limited, Coventry, Warwickshire CV3 4LF (GB)
(72) Inventor: FROZANPOOR, Iman, Coventry Warwickshire CV3 4LF (GB)
(74) Representative: Jaguar Land Rover Patents Department
(86) International application number: PCT/EP2020/065493
(87) International publication number: WO 2020/245275

(56) References cited:
- WO-A1-2013/028573
- WO-A1-2018/106750
- US-A1- 2006 246 431
- US-A1- 2007 207 548
- US-A1- 2008 135 411
- US-A1- 2009 038 938
- US-A1- 2014 061 049

## Description

### TECHNICAL FIELD

The present disclosure relates to a device foi moving a droplet. Aspects of the invention relate tc the device for moving a droplet, to a vehicle that includes the device, to an assembly that includes the device, and to a method of using the device.

### BACKGROUND

The two conventional methods of electrically controlling a droplet on a surface are known as electrowetting and dielectrowetting. Although electrowetting has been predominantly studied for numerous applications, the technology is restricted by a range of practical constraints. Dielectrowetting, on the other hand, has been gaining considerable attention for overcoming the limitations of electrowetting. Dielectrowetting is based on liquid dielectrophoresis (L-DEP), which is a bulk force generated when a non-uniform electric field interacts with the electric dipoles within a liquid It is known that dielectrowetting can overcome the contact angle saturation limitation associated with electrowetting in order to spread droplets into a thin liquid film. It is also known that there is a relationship between the change of contact angle at a solid-liquid interface (e.g. a droplet on a surface) and the voltage applied. The actuation of sessile droplets using L-DEP can be explained through asymmetric electrostatic forces changing the contact angle on one side of the droplet, thus causing motion.

However, there are certain drawbacks associated with existing prior art techniques. Firstly, very high voltages (e.g. in excess of 360 V) are required to sufficiently change the contact angle, thus precluding the application of the technology to devices where such high voltages would not be possible or practical. Secondly, prior art studies demonstrating how droplets have been moved across a surface have been reliant on knowledge of the volume of the droplets (e.g. requiring feedback) in order to select the operating parameters required to move the droplets. Thus, such technology is not suitable for the manipulation of droplets of unknown volume.

It is an object of embodiments of the invention to at least mitigate one or more of the problems of the prior art.

In WO2018/106750 a digital microfluidic system is described which includes a substrate, a plurality of electrode sets provided on the substrate, wherein each of the electrode sets includes two co-planar interdigitated finger electrodes, and a driving circuit including an AC/DC voltage source and a controller. Each of the electrode sets is individually addressable by the driving circuit under control of the controller such that an AC/DC voltage generated by the AC/DC voltage source may be selectively provided to one or more of the electrode sets.

### SUMMARY OF THE INVENTION

Various aspects and features of the present invention are defined in the claims.

In accordance with the invention, there is provided a device for moving a droplet, the device being according to the claim 1 and comprising:
at least three series of interdigitated electrode pairs, wherein each electrode of each pair is connected to an electrode in an adjacent pair in the respective series by an electrical path; and
a dielectric layer disposed on the at least three series of interdigitated electrode pairs, the dielectric layer comprising one or more sub layers;
wherein the at least three series of interdigitated electrode pairs are selectively and independently energisable to produce an electric field at a top surface of the dielectric layer so that a substance on the top surface may be manipulated by the electric field;
the device further comprising one or more groups of the interdigitated electrode pairs, each group having a longitudinal axis, wherein in each group the respective interdigitated electrode pairs are arranged along the respective longitudinal axis such that along the respective longitudinal axis no two adjacent pairs are from a single one of the at least three series, and no pair is adjacent to two other pairs from a single one of the at least three series.

The at least three series of interdigitated electrode pairs may consist of only three series of interdigitated electrode pairs. Each electrode of each pair may have a length that is 15 mm or less, 10 mm or less, or 5 mm or less.

The device may comprise a plurality of groups wherein the longitudinal axes of at least some of the plurality of groups radiate out from a common point.

Consecutive interdigitated electrode pairs along each longitudinal axis may increase in size in a direction away from the common point. The lengths of the consecutive interdigitated electrode pairs may increase in size in a direction away from the common point. The widths of the consecutive interdigitated electrode pairs may increase in size in a direction away from the common point.

In certain embodiments, all of the interdigitated electrode pairs and electrical paths are in the same plane as one another

In certain embodiments, one electrode of each pair is connected to a common ground terminal.

According to the invention, each electrode of each of the one or more interdigitated electrode pairs comprises a root and a plurality of branches that each extend from the root along a respective longitudinal axis, wherein the plurality of branches of one electrode of the pair are interdigitated with the plurality of branches of the other electrode of the pair; wherein adjacent branches of each of the interdigitated electrode pairs are spaced from one another in a direction that is perpendicular to the respective longitudinal axis of one of the adjacent branches, and the spacing varies along a direction parallel to that respective longitudinal

The spacing may decrease along the direction parallel to the respective longitudinal axis. The spacing may decrease at a substantially constant rate along the direction parallel to the respective longitudinal axis. The spacing may decrease by an amount between 150 µm and 500 µm, and optionally between 150 µm and 250 µm.

In certain embodiments, the dielectric layer has a thickness and composition such that an electric field at a top surface of the dielectric layer is at least 2 x 106 V/m when the interdigitated electrode pairs are selectively energized by a voltage of 100 V or less, 50 V or less, or 30 V or less.

In certain embodiments, the dielectric layer has a thickness and composition such that an electric field at a top surface of the dielectric layer is between 2 x 106 V/m and 1 x 107 V/m when the interdigitated electrode pairs are selectively energized by a voltage of 100 V or less, 50 V or less, or 30 V or less.

In certain embodiments, the dielectric layer has a thickness and composition such that an electric field at a top surface of the dielectric layer is at least 1 x 107 V/m when the plurality of interdigitated electrode pairs are selectively energized by a voltage of 100 V or less, 50 V or less, or 30 V or less.

In certain embodiments, the dielectric layer has a thickness less than 1 m, less than 500 nm, between 400 nm and 500 nm, or about 450 nm.

In certain embodiments, the dielectric layer includes a sub layer comprising photosensitive epoxy resin. The photosensitive epoxy resin may comprise SU8 photoresist.

In certain embodiments, the dielectric layer may include a sub layer comprising a hydrophobic material. The hydrophobic material may comprise a hydrophobic self-assembled monolayer. The hydrophobic self-assembled monolayer may comprise octadecyltrichlorosilane (OTS).

In certain embodiments, the dielectric layer may include a top sub layer comprising a lubricant.

In accordance with an aspect of the present invention, there is provided a method of using a device as described above, comprising selectively and independently energising the at least three series of interdigitated electrode pairs to produce an electric field at a top surface of the dielectric layer so that a substance on the top surface may be manipulated by the electric field.

Energising the at least three series of interdigitated electrode pairs may comprise applying an AC voltage across each of the at least three series of interdigitated electrode pairs

### BRIEF DESCRIPTION OF THE DRAWINGS

Embodiments of the invention will now be described by way of example only, with reference to the accompanying figures, in which:
Figure 1 shows a partially cut-away perspective view of a device in accordance with an embodiment of the present invention;
Figure 2A shows a top-down view of a device in accordance with an embodiment of the present invention;
Figures 2B (i) to (iv) show chronologically progressive views of detail B of Figure 2A with a droplet present;
Figure 3 shows a perspective view of a device according to an embodiment of the present invention with a droplet present on a top surface;
Figure 4 shows a perspective view of a device according to an embodiment of the present invention during fabrication;
Figure 5 shows a schematic overview of electrodes of a device according to an embodiment of the present invention;
Figures 6A to 6D each show a schematic overview of alternative electrodes of a device according to an embodiment of the invention;
Figure 7 shows a schematic representation of a method of controlling electrodes in accordance with an embodiment of the present invention;
Figure 8 shows a schematic representation of how a specific method of controlling electrodes may be performed in accordance with an embodiment of the present invention;
Figures 9a to 9h show chronologically progressive views of droplets on a device in accordance with an embodiment of the present invention;
Figure 9i shows a schematic representation of the method performed to produce the effects shown in Figures 9a to 9h; and
Figure 10 shows a vehicle according to an embodiment of the present invention.
Figure 11 shows a partially cut-away perspective view of a device in accordance with an embodiment of the present invention;
Figure 12 shows a top-down view of a device in accordance with an embodiment of the present invention;
Figure 13 shows a perspective view of a device according to an embodiment of the present invention connected to a voltage source;
Figure 14 shows a perspective view of a device according to an embodiment of the present invention with a droplet present on a top surface;
Figures 15A to 15D each show three chronologically progressive views of a device according to an embodiment of the present invention with a droplet present on its top surface, where Figure 15A shows a 1 µL droplet, Figure 15B shows a 3 µL droplet; Figure 15C shows a 6 µL droplet; and Figure 15D shows a 9 µL droplet;
Figure 16A shows a graph of measured droplet speed at various voltages for devices according to the patterns defined in the table of Figure 16B;
Figure 17 shows a device in accordance with certain embodiments of the present invention;
Figure 18A shows a device in accordance with an alternative embodiment of the present invention;
Figure 18B shows three consecutive images showing the progression of droplets across the device of Figure 18A;
Figure 19A shows a device in accordance with an alternative embodiment of the present invention;
Figure 19B shows six consecutive images showing the progression of droplets across the device of Figure 19A;
Figure 20A shows a device in accordance with an alternative embodiment of the present invention;
Figure 20B shows three consecutive images showing the progression of droplets across the device of Figure 20A;
Figure 21 shows a schematic overview of electrodes of a device according to an embodiment of the present invention;
Figures 22A to 22D each show a schematic overview of alternative electrodes of a device according to an embodiment of the invention;
Figure 23A shows a device in accordance with an alternative embodiment of the present invention;
Figure 23B shows four consecutive images showing the progression of droplets across a device in accordance with an alternative embodiment of the present invention;
Figure 24 shows a vehicle according to an embodiment of the present invention; and
Figure 25 shows a device in accordance with an alternative embodiment of the present invention.

### DETAILED DESCRIPTION

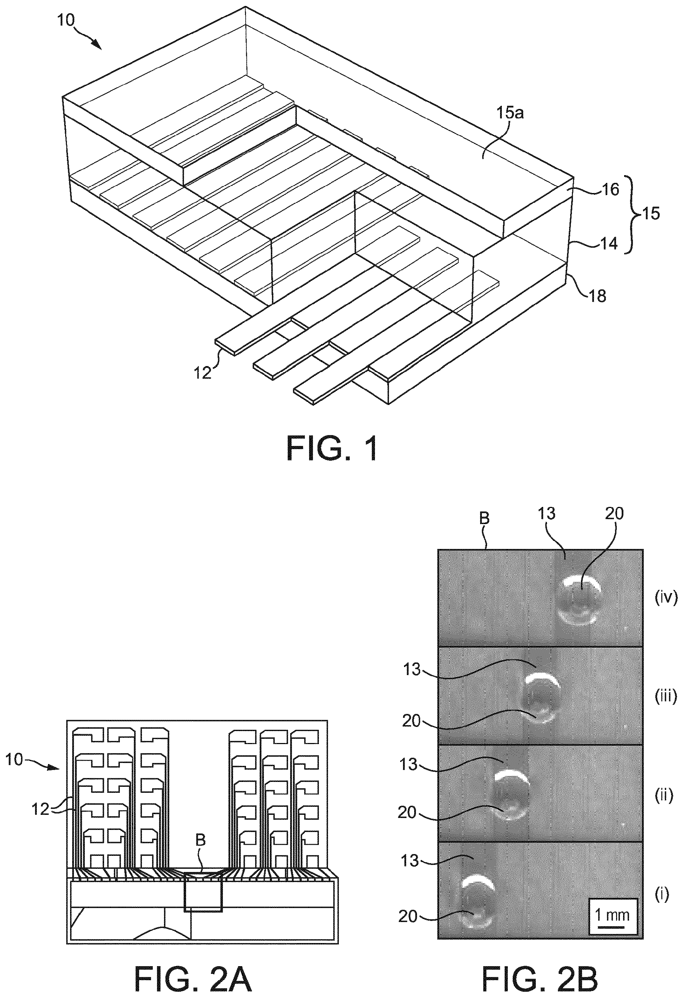

Figure 1 shows a partially cut-away perspective view of a device 10 in accordance with an embodiment of the present invention. The device 10 is configured to be capable of manipulating a substance, such as a liquid droplet or a solid (e.g. ice), as is explained below.

The device 10 comprises a plurality of electrodes 12 disposed on a substrate 18. The electrodes 12 are energisable so that an electric field in the vicinity of the electrodes 12 may be created. The electrodes 12 are energisable by creating a potential difference between one of the plurality of electrodes 12 and another of the plurality of electrodes. For example, one electrode may act as a ground electrode relative to one or more of the other electrodes. The applied voltage may be constant or variable in time.

The plurality of electrodes 12 is overlaid by a dielectric layer 15. In the non-limiting embodiment shown in the Figures, the dielectric layer 15 comprises two sub layers, namely, a primary dielectric layer 14 and a hydrophobic layer 16 that is disposed on top of the primary dielectric layer 14. In certain embodiments, the dielectric layer 15 may include a superhydrophobic layer.

In certain embodiments, one of the sub layers of the dielectric layer 15 (e.g. the primary dielectric layer 14) may comprise a photosensitive epoxy resin, for example SU8 photoresist. A thinner dielectric layer 15 may be employed by using alternative insulating materials such as silicon dioxide or aluminium oxide.

In certain embodiments, the hydrophobic layer 16 may comprise a hydrophobic self-assembled monolayer (e.g. octadecyltrichlorosilane (OTS)).

A top surface 15a of the dielectric layer 15 (which, in the embodiment shown in Figure 1, is a top layer of hydrophobic layer 16 and a top surface of the device 10 as a whole) defines a surface that may support a substance such as a liquid droplet or a solid such as ice, wherein the substance may be manipulated by an electric field generated by energised ones of the plurality of electrodes 12. For example, in accordance with methods according to embodiments of the present invention, a liquid droplet may be caused to move across the top surface 15a by selectively energising the plurality of electrodes 12. Additionally or alternatively, the energised electrodes 12 may produce heat so that a frozen solid disposed on the top surface 15a may be partially or fully melted (or sublimated). In alternative embodiments, the dielectric layer 15 may comprise one or more sub layers, and not necessarily the primary dielectric layer 14 and hydrophobic layer 16 described above.

In certain embodiments, the spacing between the plurality of electrodes 12 is 100 µm or less. In other embodiments, the spacing between the plurality of electrodes 12 is 20 µm or less, or even as small as 5 µm or less.

In certain embodiments, the dielectric layer 15 has a thickness and composition such that an electric field at the top surface 15a of the dielectric layer 15 is at least 2 x 106 V/m when the plurality of electrodes are selectively energised by a voltage of 100 V or less.

The electric field at the top surface 15a causes a change in contact angle (at the solid-liquid interface) of a droplet disposed on the top surface. If the change in contact angle is sufficient, the droplet may be caused to move on the top surface.

Devices in accordance with certain embodiments of the present invention may be operable at lower voltages relative to prior art arrangements, thus facilitating their suitability to a wide variety of applications. Lower operating voltages are made possible by a reduction in the spacing between electrodes relative to prior art arrangements. However, this leads to a lower penetration depth of the electric field created by energised electrodes, so the dielectric layer (i.e. its thickness and composition) needs to be selected so that the electric field at the top surface 15a is at least 2 x 106 V/m. At such a magnitude, a droplet may have a contact angle at the solid-liquid interface such that it may be moved or otherwise manipulated by selective activation of the electrodes 12. In this context, the thickness of the dielectric layer 15 may be considered to be the dimension along a direction substantially perpendicular to the general plane that includes the plurality of electrodes 12. In particularly advantageous embodiments, the electric field at the top surface is at least 12 x 107 V/m despite using a voltage of 100 V or less. The electric field required to manipulate the droplet may be reduced by the presence of a lubricant (e.g. an oil-based lubricant) on the top surface 15a. In this sense a top sub layer of the dielectric layer 15 may be considered to be a lubricant layer.

In certain embodiments, the dielectric layer may have a thickness less than 1 m, less than 500 nm, between 400 nm and 500 nm, or about 450 nm.

Figure 2A shows a top-down view of a device 10 in accordance with an embodiment of the present invention. The device of Figure 2A comprises a plurality of electrodes 12 and may otherwise be in accordance with the device 10 described above in relation to Figure 1.

Figures 2B (i) to (iv) show chronologically progressive photographic views of detail B of Figure 2A with a droplet 20 present on the top surface. In Figure 2B electrodes in the shaded region 13 are energised while electrodes outside of shaded region 13 are not energised. As can be seen from the progression from (i) to (iv), as the shaded region 13 representing energised electrodes is moved across the device 10, the droplet 20 is also caused to move across the top surface 15a. In the example shown in Figure 2B, the droplet comprises deionised water and the electrodes were energised using 100 V at 50 kHz with 100 ms delay per step.

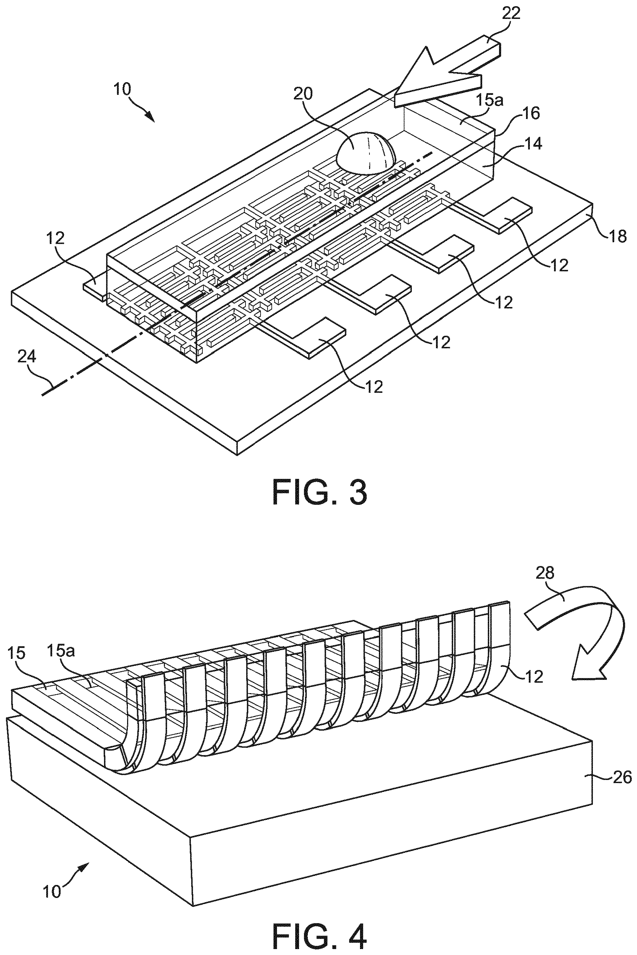

Figure 3 shows a perspective view of a device 10 according to an embodiment of the present invention. The device 10 extends along a longitudinal axis 24 that is intersected by each of the plurality of electrodes 12. In the non-limiting embodiment shown in Figure 3, one of the plurality of electrodes 12 serves as a common ground electrode, and others of the plurality of electrodes 12 are arranged to form pairs of electrodes between themselves and the common ground electrode. That is, a series of electrode pairs is provided, but the pairs share a common electrode so there are no unique pairs. The pairs of electrodes 12 are selectively energisable to create an electric field that is experienced by a droplet 20 on the top surface 15a and consequently manipulated. By sequentially energising the pairs of electrodes 12, the droplet 20 may be caused to move along the top surface 15a in the direction indicated by numeral 22 in Figure 3 (which is parallel to the longitudinal axis 24).

A device 10 according to an alternative embodiment is shown in Figure 4. The device 10 of Figure 4 is not fabricated on a substrate per se (that is distinct from the dielectric layer). Rather, the dielectric layer 15 acts as a substrate for supporting the electrodes 12. Moreover, the dielectric layer 15 comprises a flexible material so that the device 10, as a whole, is flexible. The flexible device 10 may be affixed (indicated by arrow 28 in Figure 4) to a surface 26 that may be curved and/or be flexible itself. In some embodiments, the device 10 may be provided with an adhesive protecting layer for affixing the device 10 to a surface.

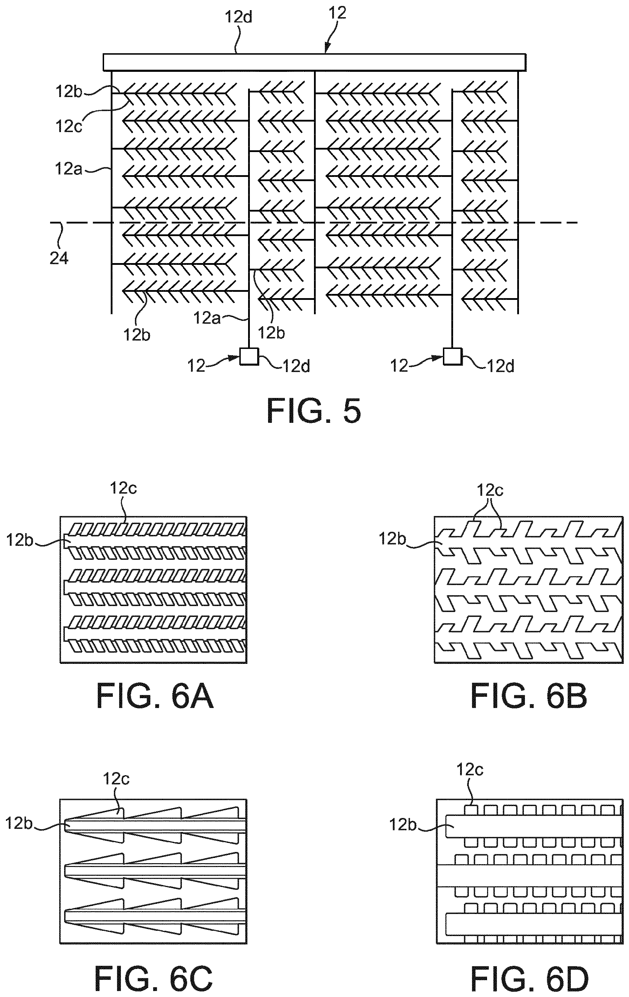

Figure 5 shows a schematic overview of a plurality of electrodes 12 of a device 10 according to an embodiment of the present invention. Each electrode 12 comprises a root 12a, a plurality of branches 12b that each extend from the root 12a, and a plurality of sub-branches 12c that each extend from each of the plurality of branches 12b. Each electrode 12 additionally includes an electrode pad 12d that is greater in area relative to adjacent areas of the respective electrode 12. The electrode pad 12d may be used to electrically connect the electrode to a source of electrical energy so as to apply a potential difference. In the non-limiting embodiment shown in Figure 5, some electrodes 12 (every alternate one) share a common electrode pad 12d. In alternative embodiments, each electrode 12 may comprise an individual electrode pad 12d. Also in the non-limiting embodiment shown in Figure 5, certain ones of the electrodes 12 include branches 12b that extend from opposite sides of the respective root 12a. In the particular embodiment shown, the branches 12b extending from one side of the respective root 12a are of a different length to the branches 12b extending from the other side of the root 12a. In alternative embodiments, branches 12b extending from both sides of a root 12a may be of substantially equal length.

The electrodes 12 are arranged in pairs so that the plurality of branches 12b of a first electrode 12 are interdigitated with the plurality of branches 12b of a second, adjacent electrode 12 of the pair. Thus, the two adjacent electrodes 12 may be described as an interdigitated electrode pair. As noted above, in some embodiments, a single electrode 12 may serve as a common electrode to two or more of the other electrodes 12 so that not all pairs comprise unique electrodes 12.

In the specific embodiment shown in Figure 5, the interdigitated electrode pairs are unique as no one electrode features in more than one pair.

The non-limiting embodiment of Figure 5 additionally shows an arrangement in which the root 12a of the first electrode 12 of each interdigitated electrode pair is substantially parallel to the root 12a of the second electrode 12 of the interdigitated electrode pair. Furthermore, each of the plurality of branches 12b extends substantially perpendicularly from the respective root 12a. Each of the plurality of sub-branches 12c extends from the respective plurality of branches 12b at an inclined angle (i.e. an angle that is not 90). In the embodiment of Figure 5, the sub-branches 12c all extend from their respective branch 12b in the same direction relative to the longitudinal axis 24 irrespective of which of the electrodes of the pair they belong.

Figures 6A to 6D each show a partial view of alternative electrodes of a device according to an embodiment of the invention. In particular, Figure 6A shows an arrangement that is similar to the embodiment of Figure 5, but wherein the spacing between adjacent sub-branches 12c is smaller relative to the respective spacings shown in Figure 5.

In certain embodiments, the plurality of sub-branches 12c of each of the first and second electrodes 12 of each interdigitated electrode pair comprise a first set of sub-branches and a second set of sub-branches, where the first set of sub-branches is not identical to the second set of sub-branches. For example, in the embodiment shown in Figure 6B, a first set of sub-branches 12c comprise longer sub-branches 12c than a second set of sub-branches and individual ones of the first set are alternately arranged with individual ones of the second set. For the avoidance of doubt, a "longer" sub-branch 12c extends further from the respective branch 12b relative to a "shorter sub-branch 12c.

Figure 6C shows an embodiment in which the sub-branches 12c are substantially wedge-shaped (i.e. generally triangular) and extend from the respective branches 12b to form a saw-tooth profile.

In the embodiment of Figure 6D, the plurality of sub-branches 12c extend substantially perpendicularly from the respective plurality of branches 12b. Moreover, each of the plurality of sub-branches 12c of the first electrode of each interdigitated electrode pair has a longitudinal axis that is not coincident with a longitudinal axis of each of the plurality of sub-branches 12c of the second electrode of the interdigitated electrode pair. To state this another way, the plurality of sub-branches 12c of the first electrode of each interdigitated electrode pair are not aligned with the plurality of sub-branches 12c of the second electrode of the interdigitated electrode pair along an axis that is perpendicular to the axes along which the branches 12b extend.

The geometrical "irregularities" provided by the arrangements shown in Figures 5 and 6A to 6D serve to enhance the local electric fields generated by the electrodes 12.

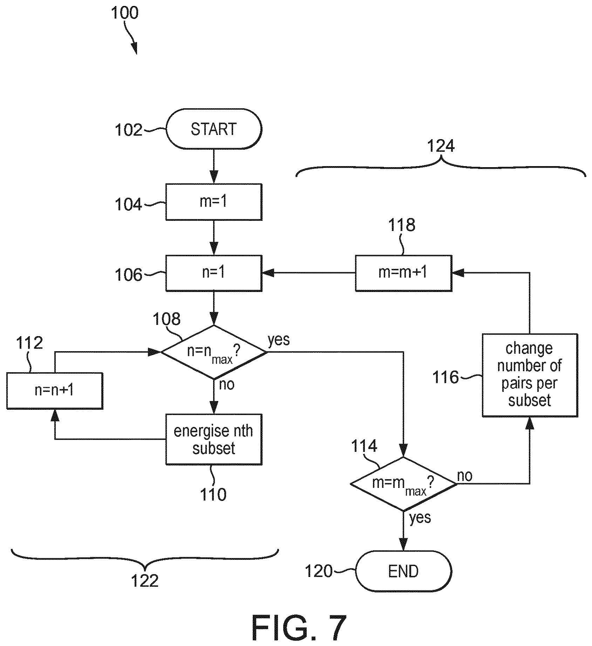

Figure 7 shows a schematic representation of a method 100 of controlling a plurality of electrodes 12 in accordance with an embodiment of the present invention.

The method 100 starts at block 102 and a cycle number m is set to 1 at block 104 (since a first cycle of controlling the electrodes 12 must take place prior to any subsequent cycle) and a counter n is set to 1 at block 106. The counter n is used to define a step number.

The method 100 includes an outer iterative loop 124 in which m is increased by 1 each time until a maximum value of m, mmax, is reached. The method 100 additionally includes an inner iterative loop 122 which is nested in the outer iterative loop 124 and in which n is increased by 1 each time until a maximum value of n, nmax, is reached. Considering the inner iterative loop 122, at block 108 a check is made to verify that n has not yet reached nmax. If it has not, an nth subset of the plurality of electrode pairs 12 is energised in a nth step at block 110. Next, n is increased by 1 at block 112 and the verification at block 108 is repeated. If n=n+1 remains below nmax, then the inner iterative loop 124 continues and a nth subset (for n=n+1) of the plurality of electrode pairs 12 is energised at block 110 in a n=n+1th step. In the n=n+1th step, electrode pairs of the n=n+1th subset are adjacent to electrode pairs of the nth (i.e. previously energies) subset. Additionally, in the n=n+1th step the n=n+1th subset comprises the same number of electrode pairs as the nth subset. That is, for a given cycle (i.e. a given value of m) the number of electrode pairs energised in each subset does not change.

The value of n is increased at block 112 once more and the inner iterative loop 122 is repeated until the updated value of n equals nmax.

If block 108 determines that n=nmax then a check is made at block 114 as to whether the cycle number m has reached mmax. If it has not, then a notional change is made to the number of pairs of electrodes that are to be energised in the forthcoming cycle (relative to the number of energised electrode pairs in each subset in the previous cycle). The change made at block 116 could be an increase or a decrease which may be according to a fixed increment or a changeable increment. In certain embodiments, the change made at block 116 is an increase where the increment of the change is according to a sequence or a part of a sequence. For example, the change made at block 116 may be an increase according to a part of the Fibonacci sequence, e.g. 1, 2, 3, 5. Once the change has been made at block 116, the cycle number m is increased at block 118 and the inner iterative loop 122 cycles from n=1 to n=nmax, where the number of electrode pairs energised at block 110 is according to the number set previously at block 116.

The inner iterative loop 122 and the outer iterative loop 124 continue until n=nmax as determined at block 108 and m=mmax as determined at block 114. When these two conditions are met, the method 100 ends at block 120.

In alterative embodiments, other suitable predetermined conditions (i.e. other than n=nmax and/or m=mmax) may be used to terminate the outer iterative loop 124 and/or the inner iterative loop 122.

In certain embodiments, the inner iterative loop 122 may be performed and repeated with the same number of energised electrode pairs before the outer iterative loop 124 causes the number of energised electrode pairs to be changed.

In certain embodiments the method 100 may be performed simultaneously over several regions of an array of electrodes. That is, the area over which the method is performed may be easily varied so that the present invention may be suitably scaled to a wide variety of applications.

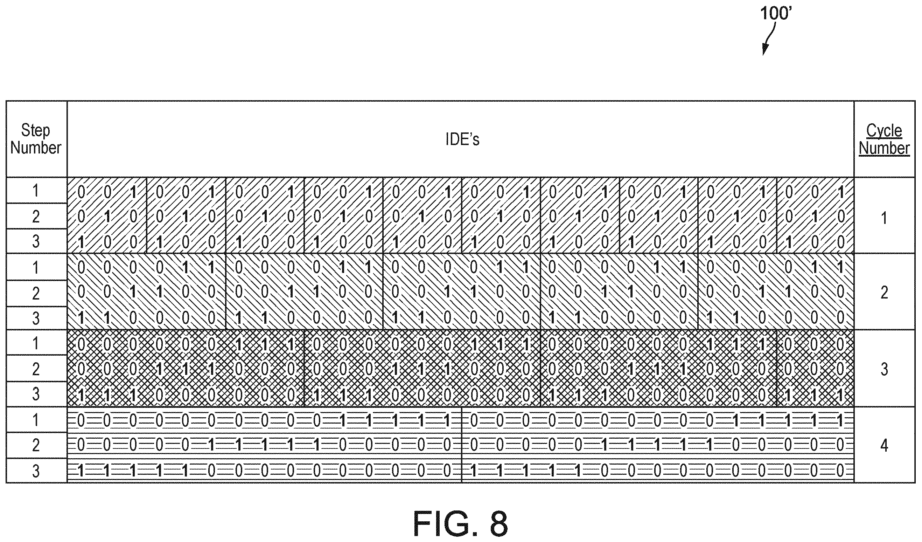

Figure 8 shows a schematic representation of how a specific method 100' of controlling electrodes 12 (labelled IDEs for interdigitated electrodes) may be performed in accordance with an embodiment of the present invention. In particular, Figure 8 schematically represents electrode pairs 12 by a 0 or a 1, where a 0 denotes a non-energised electrode pair 12 and a 1 denotes an energised electrode pair 12. In Figure 8, the step numbers 1 to 3 correspond to n=1, 2, 3 (where nmax = 3) with respect to the inner iterative loop 122 described above. Similarly, the cycle numbers 1 to 4 correspond to m=1, 2, 3, 4 (wherein mmax=4) with respect to the outer iterative loop 124 described above.

In a 1st cycle (i.e. m=1), 1st to 3rd steps (i.e. n=1, 2, 3) are performed. In a 1st step (n=1), a single electrode pair is energised. That is, the subsets of the 1st cycle comprise a single electrode pair. In a second step (n=2), a single electrode pair that is adjacent to the previously energised electrode pair is energised (i.e. relative to the 1st step). In a third step (n=3) a single electrode pair that is adjacent to the previously energised electrode pair is energised (i.e. relative to the 2nd step).

In the example of Figure 8, the method is performed multiple times simultaneously across the array of electrode pairs (10 times in the 1st cycle in the specific example shown in Figure 8). In this example, the simultaneously energised electrode pairs are spaced from one another so that the final subset (i.e. in the nmaxth step) of energised electrode pairs in the cycle is adjacent to the first subset (i.e. in the 1st step) of energised electrode pairs in that same cycle.

In the 2nd cycle (i.e. m=2), 1st to 3rd steps (i.e. n=1, 2, 3) are performed once more, but with a different number of electrode pairs in each energised subset (relative to the previous cycle, m=1). In particular, two electrode pairs are energised in each step (n=1, 2, 3) of the 2nd cycle.

In the 3rd cycle (i.e. m=3), 1st to 3rd steps (i.e. n=1, 2, 3) are performed once more, but with a different number of electrode pairs in each energised subset (relative to the previous cycle, m=2). In particular, three electrode pairs are energised in each step (n=1, 2, 3) of the 3rd cycle.

In the 4th cycle (i.e. m=3), 1st to 3rd steps (i.e. n=1, 2, 3) are performed once more, but with a different number of electrode pairs in each energised subset (relative to the previous cycle, m=3). In particular, five electrode pairs are energised in each step (n=1, 2, 3) of the 4th cycle.

The number of electrode pairs energised in the 1st, 2nd, 3rd and 4th cycles are 1, 2, 3, 5 respectively which is in accordance with a part of the Fibonacci sequence.

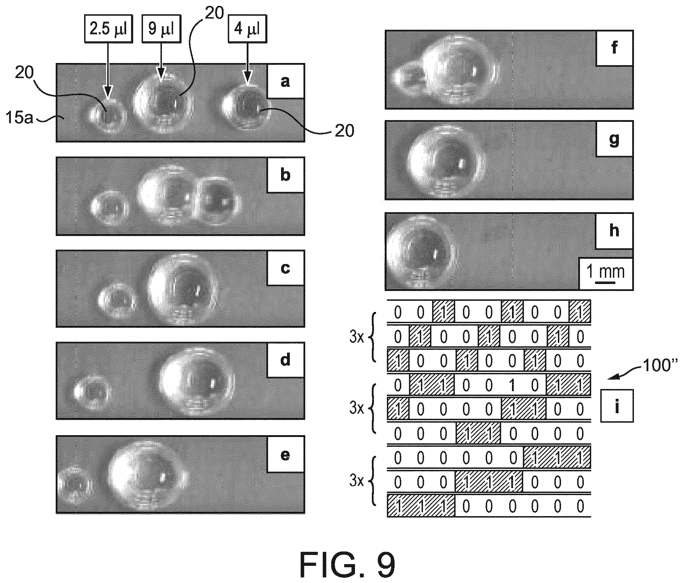

Figures 9a to 9e demonstrate an example of the effectiveness of a method of the type described above in relation to Figures 7 and 8. A schematic representation of the method performed to produce the effects shown in Figures 9a to 9h is shown in Figure 9i.

Figures 9a to 9h show chronologically progressive views of droplets 20 on a top surface 15a of a device in accordance with an embodiment of the present invention. In Figure 9a, three droplets 20 are present and are of different volumes, namely 2.5 µl, 4 µl, and 9 µl. The droplets comprise droplets of deoiniseddeionised water.

The top surface 15a is a top surface of a lubricant layer (i.e. the dielectric layer includes a lubricant layer as its uppermost layer). The electrode pairs (not visible in Figures 9a to 9h) are selectively energised in accordance with a method 100" that is schematically represented in Figure 9i in order to produce the effects shown in Figures 9a to 9h. The electrode pairs are energised at a voltage of 85 V with a frequency of 50 kHz, with a 100 ms delay per step (an additional delay time was also employed to enable a precise monitoring of the droplets in this example). The method 100" causes the movement of the droplets across the top surface 15a. The cycles were each repeated three times and this ensured a complete transition of the droplets to the left side of the top surface 15a. In the specific method 100", the code repeats itself every three electrode pairs. The method 100" may be applied to any number of electrode pairs, but a minimum of nine electrode pairs are needed for the three iteration cycles depicted in Figure 9i.

Considering the effect of the method 100" on the droplets 10, the smaller droplets 20 are initially caused to move (by the activation of single electrode pairs) and the 4 µl droplet merges with the 9 µl droplet. However, after 1.5 seconds, the newly formed larger droplet covers an area of the top surface 15a that overlays more than three electrode pairs and, as a consequence, the actuation towards the left side of the device is delayed until the full set of iterations is repeated multiple times. The actuation process of a droplet moving from one electrode pair to another is only possible when the droplet moves to an area over an electrode pair which is due to be active (i.e. energised), otherwise it will move back to the previous electrode for the next set of iterations. Furthermore, depending on the application, the back-and-forth motion of the droplets on the top surface 15a may be desirable as it can be used to remove impurities from the top surface 15a. Alternatively, a direct linear actuation, which avoids the back-and-forth motion, can be realised using a longer activation of the electrode pairs, or a device with a higher electrode resolution.

The results shown in Figures 9a to 9h verify that the actuation of droplets with varying volume is possible using low operating voltages, without the need of any active feedback control system. Furthermore, the generated electric fields can penetrate mild ionic solutions (such as salty water) when they are applied with a sufficient high frequency.

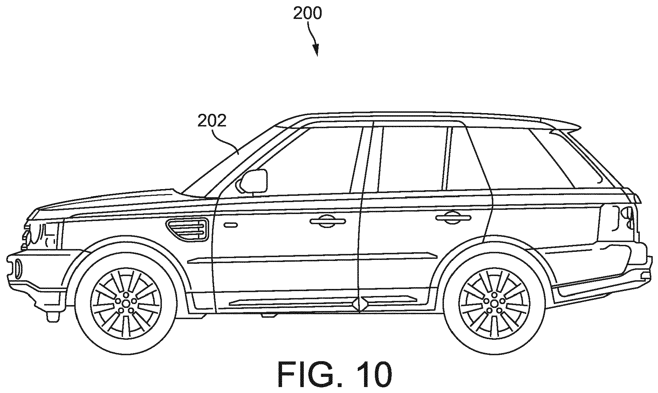

Figure 10 shows a vehicle 200 according to an embodiment of the present invention. The vehicle 200 may incorporate any of the devices described above and/or any component that is controlled according to the methods described above. For example, a windscreen 202 of the vehicle 200 may include any of the devices described above such that liquid droplets may be caused to move to a specified region of the windscreen (e.g. an edge). In alternative embodiments, other components such as substantially translucent materials of the vehicle may incorporate the above-described devices and/or be controlled according to the above-described methods.

In alternative embodiments, the methods and/or apparatus described above may be used to manipulate substance in a manner other than that depicted in Figures 9a to 9h (i.e. other than transporting liquid droplets along the top surface). For example the substance that is to be manipulated may be a solid (e.g. ice). Devices and/or methods according to embodiments of the present invention may be used to cause melting or sublimation of the solid substance. Such an operation may be achieved by selecting the frequency at which the voltage is applied to the electrode pairs to be one that causes heating of the substance. Alternatively, devices and/or methods according to embodiments of the present invention may be used to spread a liquid substance (that may initially, for example, be in droplet form) over the top surface.

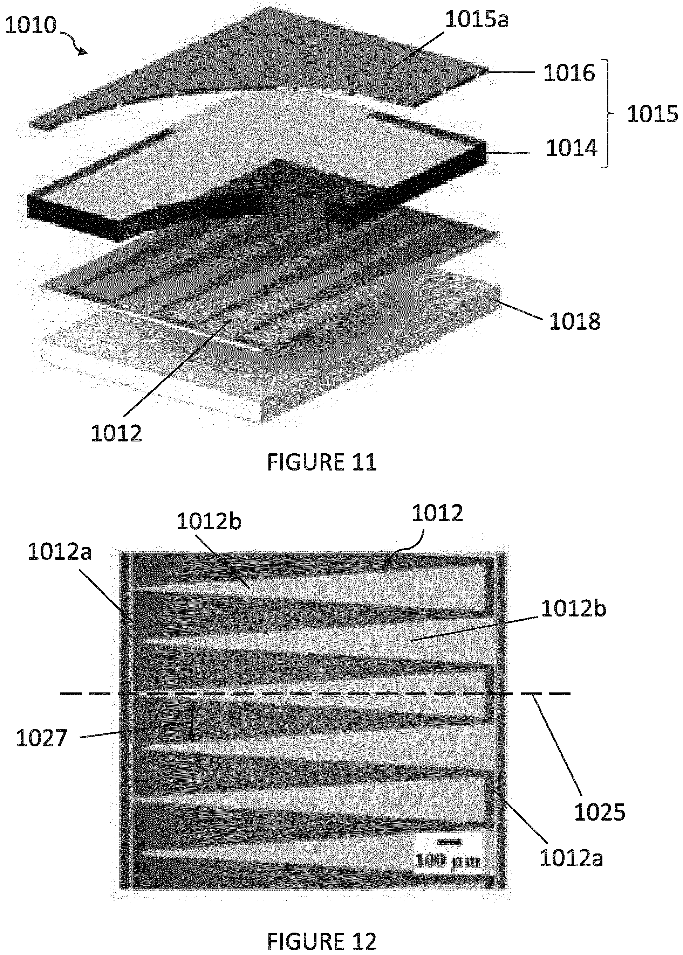

Figure 11 shows a partially cut-away perspective view of a device 1010 in accordance with an embodiment of the present invention. The device 1010 is configured to be capable of manipulating a substance, such as a liquid droplet or a solid (e.g. ice), as is explained below.

The device 1010 comprises a plurality of electrodes 1012 disposed on a substrate 1018, which in certain embodiments may be flexible. The electrodes 1012 are energisable so that an electric field in the vicinity of the electrodes 1012 may be created. The electrodes 1012 are energisable by creating a potential difference between one of the plurality of electrodes 1012 and another of the plurality of electrodes. For example, one electrode 1012 may act as a ground electrode relative to one or more of the other electrodes 1012. The applied voltage may be constant or variable in time.

The plurality of electrodes 1012 is overlaid by a dielectric layer 1015. In the non-limiting embodiment shown in the Figures, the dielectric layer 1015 comprises two sub layers, namely, a primary dielectric layer 1014 and a hydrophobic layer 1016 that is disposed on top of the primary dielectric layer 1014. In certain embodiments, the dielectric layer 1015 may include a superhydrophobic layer.

In certain embodiments, one of the sub layers of the dielectric layer 1015 (e.g. the primary dielectric layer 1014) may comprise a photosensitive epoxy resin, for example SU8 photoresist. A thinner dielectric layer 1015 may be employed by using alternative insulating materials such as silicon dioxide or aluminium oxide.

In certain embodiments, the hydrophobic layer 1016 may comprise a hydrophobic self-assembled monolayer (e.g. octadecyltrichlorosilane (OTS), Teflon^{®}, or another polymer coating).

A top surface 1015a of the dielectric layer 1015 (which, in the embodiment shown in Figure 11, is a top layer of hydrophobic layer 1016 and a top surface of the device 1010 as a whole) defines a surface that may support a substance such as a liquid droplet or a solid such as ice, wherein the substance may be manipulated by an electric field generated by energised ones of the plurality of electrodes 1012. For example, in accordance with methods according to embodiments of the present invention, a liquid droplet may be caused to move across the top surface 1015a by selectively energising the plurality of electrodes 1012. Additionally or alternatively, the energised electrodes 1012 may produce heat so that a frozen solid disposed on the top surface 1015a may be partially or fully melted (or sublimated). In alternative embodiments, the dielectric layer 1015 may comprise one or more sub layers, and not necessarily the primary dielectric layer 1014 and hydrophobic layer 1016 described above.

In certain embodiments, the dielectric layer 1015 has a thickness and composition such that an electric field at the top surface 1015a of the dielectric layer 1015 is at least 2 x 106 V/m when the plurality of electrodes are selectively energised by a voltage of 100 V or less.

The electric field at the top surface 1015a causes a change in contact angle (at the solid-liquid interface) of a droplet disposed on the top surface. If the change in contact angle is sufficient, the droplet may be caused to move on the top surface.

Devices in accordance with certain embodiments of the present invention may be operable at lower voltages relative to prior art arrangements, thus facilitating their suitability to a wide variety of applications. Lower operating voltages are made possible by a reduction in the spacing between electrodes relative to prior art arrangements. However, this leads to a lower penetration depth of the electric field created by energised electrodes, so the dielectric layer (i.e. its thickness and composition) needs to be selected so that the electric field at the top surface 1015a is at least 2 x 106 V/m. At such a magnitude, a droplet may have a contact angle at the solid-liquid interface such that it may be moved or otherwise manipulated by selective activation of the electrodes 1012. In this context, the thickness of the dielectric layer 1015 may be considered to be the dimension along a direction substantially perpendicular to the general plane that includes the plurality of electrodes 1012. In certain embodiments, the electric field at the top surface 1015a is between 2 x 106 V/m and 1 x 107 V/m when using a voltage of 100 V or less. In particularly advantageous embodiments, the electric field at the top surface is at least 1 x 107 V/m despite using a voltage of 100 V or less. The electric field required to manipulate the droplet may be reduced by the presence of a lubricant (e.g. an oil-based lubricant) or a superhydrophobic coating on the top surface 1015a. In this sense a top sub layer of the dielectric layer 1015 may be considered to be a lubricant layer.

In certain embodiments, the dielectric layer may have a thickness less than 1 µm, less than 500 nm, between 400 nm and 500 nm, or about 450 nm.

Figure 12 shows a top-down view of a device 1010 in accordance with an embodiment of the present invention. The device of Figure 12 comprises a plurality of electrodes 1012 and may otherwise be in accordance with the device 1010 described above in relation to Figure 11.

Each electrode 1012 comprises multiples branches 1012b that each extend along a respective longitudinal axis 1025. The branches 1012b extend from a common root 1012a of each electrode 1012. In certain embodiments, each branch 1012b has a length that is 15 mm or less, 10 mm or less, or 5 mm or less. The electrodes are arranged in pairs where the branches 1012b of one electrode 1012 of the pair are interdigitated with the branches 1012b of the other electrode of the pair, thus forming an interdigitated electrode pair. Along a direction that is perpendicular to the longitudinal axes 1025, the branches 1012b of each electrode 1012 alternate. In the non-limiting embodiment shown in Figure 12, the two electrodes 1012 of the pair are arranged so that the longitudinal axes 1025 of adjacent branches 1012b are parallel to one another The two electrodes 1012 of the interdigitated electrode pair are spaced from one another so that a gap exists. As a result, when a voltage is applied across the pair of electrodes 1012, an electric field is created between the electrodes 1012. This electric field extends to the top surface 1015a so that a substance disposed thereon may be manipulated by the electric field.

In the embodiment of Figure 12, adjacent branches 1012b of the interdigitated electrode pair are spaced from one another in a direction that is perpendicular to the longitudinal axis 1025 of one of the adjacent branches 1012b. This spacing is indicated in Figure 12 by reference numeral 1027, and it varies along a direction parallel to the respective longitudinal axis 1025. In particular, the spacing decreases at a constant rate along a direction parallel to the longitudinal axis 1025. In certain embodiments, the spacing decreases by an amount between 150 µm and 500 µm, and optionally between 150 µm and 250 µm. For example, the spacing may vary from a maximum of between 200 µm and 500 µm to a minimum of between 20 µm and 50 µm. In alternative embodiments the spacing may decrease at a non-constant rate along a direction parallel to the longitudinal axis 1025. In certain embodiments, the spacing may increase and decrease in a regular or irregular manner along a direction parallel to the longitudinal axis 1025.

In the non-limiting embodiment of Figure 12, the spacing varies due to the branches 1012b being triangular in shape. In general, the branches 1012b may have any suitable geometry to provide the varying spacing, and not all branches 1012b may necessarily be identical to one another

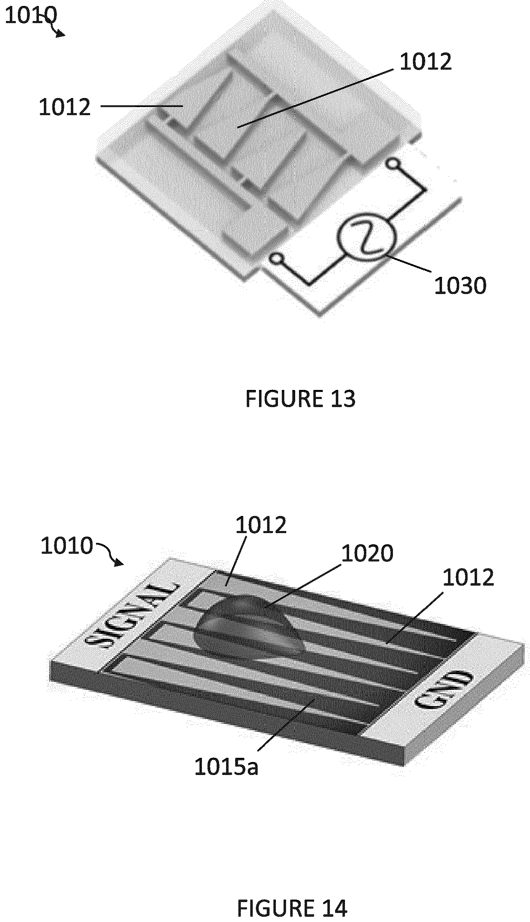

Figure 13 shows a device according to an embodiment of the present invention with a voltage source 1030 connected to the two electrodes 1012 of an interdigitated electrode pair, such as the one described above with reference to Figure 12. The application of a voltage by the voltage source 1030 creates an electric field between the electrodes 1012 and this electric field may extend to the top surface 1015a of the device to manipulate a substance thereon.

Figure 14 shows such a device 1010 with a droplet 1020 disposed on the top surface 1015a. Whilst the voltage source is not shown explicitly in Figure 14, one electrode of the interdigitated electrode pair is shown as being connected to ground ("GND") and the other electrode 1012 of the interdigitated electrode pair is shown as being connected to a signal ("SIGNAL"). Connection to ground and a signal provides a voltage to the interdigitated electrode pair that creates an electric field that may manipulate the droplet 1020 disposed on the top surface 1015a.

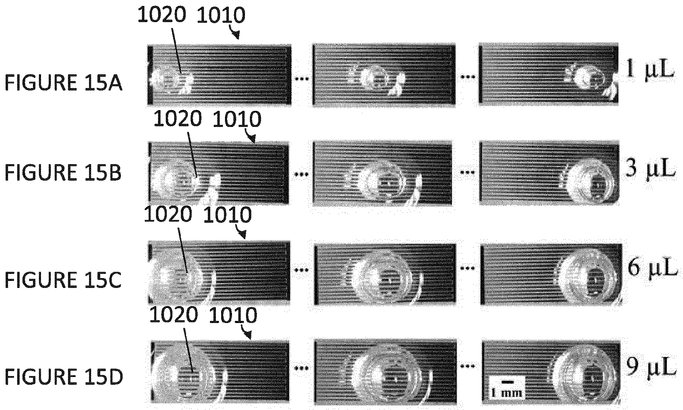

Figures 15A to 15D show images of droplets 1020 being manipulated by a device of the type described above with reference to Figures 11 to 14. In Figures 15A, 15B, 15C and 15D, the droplet 1020 has a volume of 1 µL, 3 µL, 6 µL and 9 µL, respectively. In the three images of each of Figures 15A to 15D, it is shown that the droplet 1020 is caused to move from left to right across the device 1010. More specifically, the droplet 1020 moves along a direction that is parallel to the longitudinal axes 1025 of the electrode branches and in a direction along which the spacing 1027 decreases.

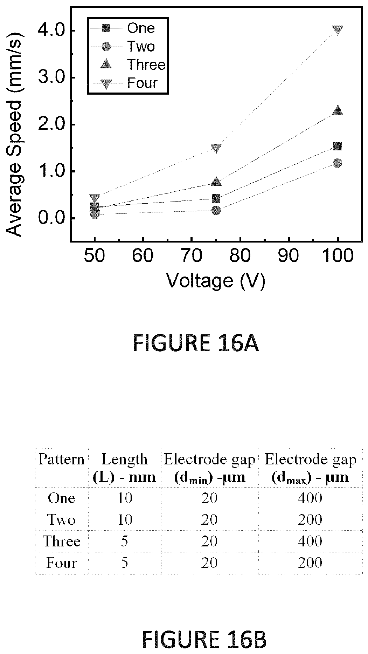

Figure 16A shows a graph indicating the average speed of a droplet travelling along the top surface of a device of the type described above with reference to Figures 11 to 15D at different voltages. The four series ("One", "Two", "Three", and "Four") relate to four different arrangements of electrodes that are defined in the table shown in Figure 16B. In Figure 16B, the four arrangements are defined according to the lengths of the electrodes (i.e. the lengths along the directions parallel to the respective longitudinal axes 1025), minimum electrode gap (i.e. minimum spacing 1027), and maximum electrode gap (i.e. maximum spacing 1027). As seen from Figure 16A, reducing the lengths of the electrodes and reducing the maximum electrode gap results in greater average speed.

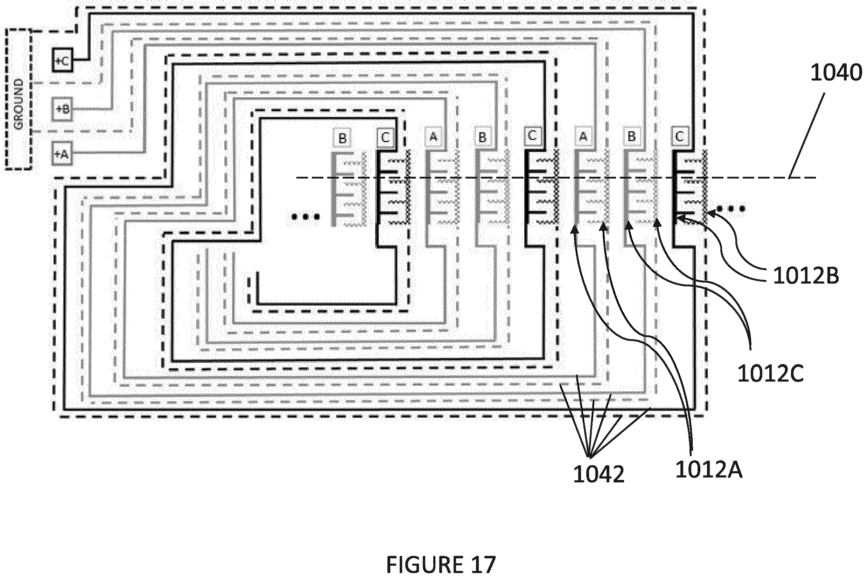

Figure 17 shows an arrangement of electrodes that may be incorporated into a device in accordance with an embodiment of the present invention. In the arrangement of Figure 7, three series A, B and C of interdigitated electrode pairs 1012A, 1012B, 1012C are provided. In each series, each electrode 1012A, 1012B, 1012C of each pair is connected to an electrode 1012A, 1012B, 1012C of an adjacent pair in the same series A, B, C by an electrical path 1042.

All of the interdigitated electrodes shown in Figure 17 form part of a single group of interdigitated electrode pairs, wherein the group has a longitudinal axis 1040. The interdigitated electrode pairs of the group are arranged along the longitudinal axis 1040 such that, along the longitudinal axis 1040, no two adjacent pairs are from a single one of the three series A, B, C, and no pair is adjacent to two other pairs from a single one of the three series A, B, C. In the embodiment shown in Figure 17, the order of the series of adjacent pairs along the longitudinal axis 1040 is: {... B, C, A, B, C, A, B, C,...}.

The pairs of electrodes 1012A, 1012B, 1012C are energisable by application of a voltage across the two electrodes 1012A, 1012B, 1012C of each pair. In the embodiment shown in Figure 17, each series A, B, C is energisable by applying a signal of +A, +B, +C, respectively, to one electrode of each pair of the respective series and connecting the other electrode of each pair to ground. In this embodiment, each series A, B, C is connected to a common ground terminal. In alternative embodiments, unique terminals may be provided. In the embodiment of Figure 17, the series may be energised individually and sequentially (e.g. C, B, A, C, B, A,...) in order to cause a droplet to move along the longitudinal axis 1040. This specific arrangement utilises only four terminals (including the common ground) for three independently controllable series A, B, C, thus removing the design requirement to fabricate many electrical contact points.

In alternative embodiments, more than three series may be provided, where the additional series may or may not share a common ground terminal with other series. In some embodiments, the electrode pairs may be arranged along the longitudinal axes of multiple groups of electrode pairs

Arranging the electrode pairs in series and groups, as in the embodiment shown in Figure 17, may simplify the manufacturing process of the device. For example, such an arrangement may eliminate the requirement for wire bonding or other costly or time-consuming electrical connection techniques. Arranging the interdigitated electrode pairs and the electrical paths 1042 in a common plane further simplifies the manufacture of the device 1010. Through this arrangement, the three or more series of interdigitated electrode pairs are selectively and independently energisable to produce an electric field at a top surface of the dielectric layer so that a substance on the top surface may be manipulated by the electric field. This is advantageous in that as few as three interdigitated electrode pairs may be used (and controlled) to cause a substance to traverse the entire top surface of the dielectric layer along longitudinal axis 1040. Thus, the complexity of the manufacturing process and the control electronics may be reduced in comparison with alternative arrangements.

The distance between the electrodes 1012A, 1012B, 1012C of each electrode pair may vary in accordance with the embodiments described above with reference to Figures 11 to 16B. In other embodiments, the electrodes 1012A, 1012B, 1012C of each pair may be separated by a distance that does not vary along a direction that is parallel to the longitudinal axes of the branches of the electrodes 1012A, 1012B, 1012C (which is also parallel to the longitudinal axis 1040 of the group of electrode pairs).

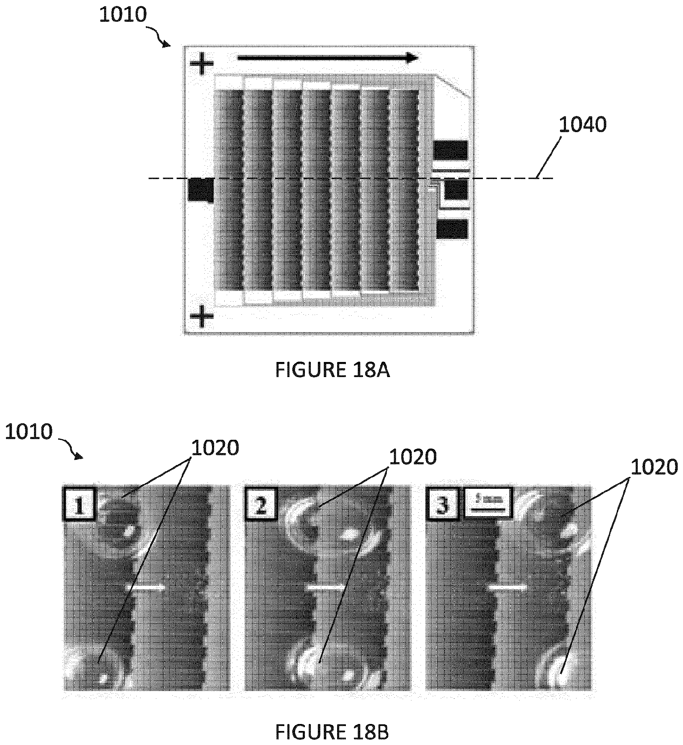

Figure 18A shows a device 1010 made in accordance with the schematic diagram of Figure 17, where the distance between the electrodes of each electrode pair varies in accordance with the embodiments described above with reference to Figures 11 to 16B. The interdigitated electrode pairs are arranged into a single group that has a longitudinal axis 1040. When the series of interdigitated electrode pairs are energised sequentially a substance on the top surface of the device is caused to move along the direction indicated by the arrow in Figure 18A, which is parallel to the longitudinal axis 1040.

Figure 18B shows three images (insets 1 to 3) that show two droplets being caused to move along the top surface of the device 1010 of Figure 18A along the direction indicated by the arrow.

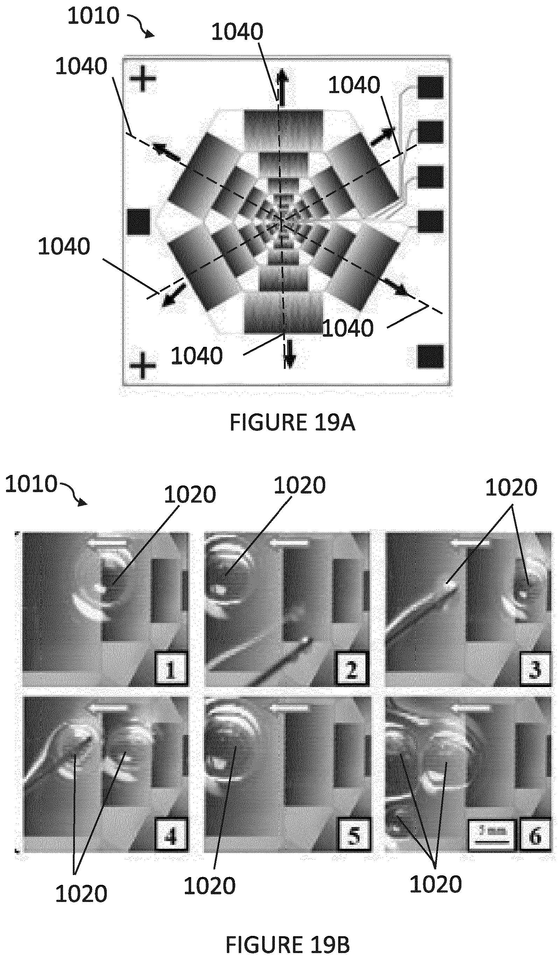

Figure 19A shows a device 1010 made in accordance with the schematic diagram of Figure 17, where the distance between the electrodes of each electrode pair varies in accordance with the embodiments described above with reference to Figures 11 to 16B. The interdigitated electrode pairs are arranged into six groups that each have a longitudinal axis 1040. Each group radiates from a common central point. Each interdigitated electrode pair collectively covers an area that may be termed an interdigitated electrode pair array. The size of the interdigitated electrode pair arrays increases along a radially outward direction along the longitudinal axes 1040. That is, each consecutive interdigitated electrode pair array along each longitudinal axis 1040 increases in both length and width relative to the previous array. When the series of interdigitated electrode pairs are energised sequentially a substance on the top surface of the device is caused to move along one of the directions indicated by the arrows in Figure 19A, which are each parallel to the respective longitudinal axis 1040. The surface area of the blank gaps between electrode arrays increases in the radially outward direction in accordance with the golden ratio. Droplets in the radially inner region of the device are caused to be continually transported radially outwardly to merge and form larger droplets. Larger droplets are less likely to become isolated on one of the blank gaps, so the impact of the increasing blank gaps is offset by the reducing likelihood of a droplet moving to an area where it is no longer being manipulated by the electrodes.

Figure 19B shows six images (insets 1 to 6) that show droplets being caused to move along the top surface of the device 1010 of Figure 19A along the direction indicated by the arrow.

The embodiment of Figures 19A and 19B provides radial displacement of a substance and may be useful in applications where radial-symmetric droplet motion is desired, e.g. for the cleaning of solar panels or electronic sensors.

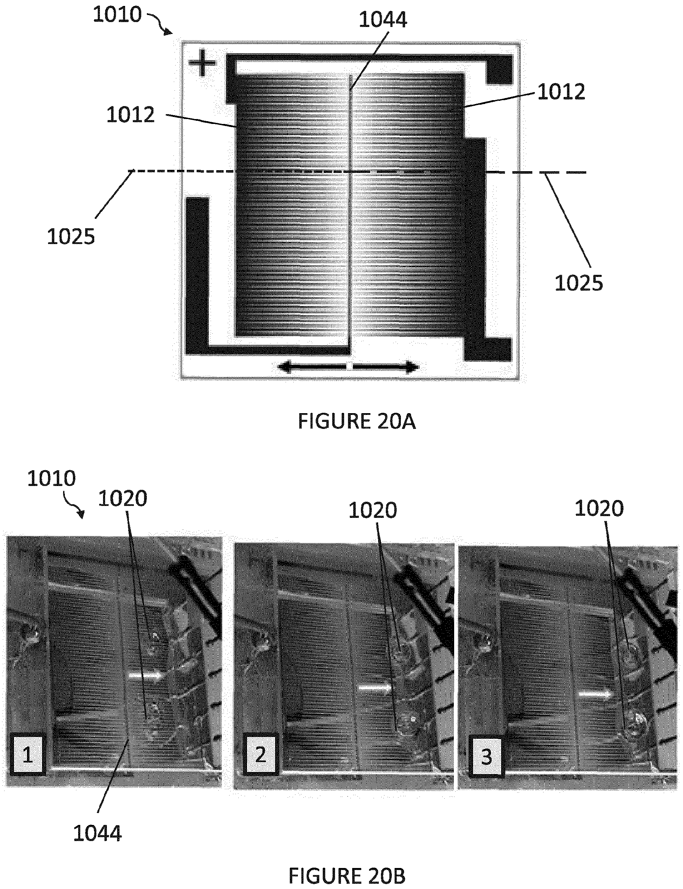

Figure 20A shows a device 1010 according to an embodiment of the invention in which two pairs of interdigitated electrodes 1012 are provided and one electrode of each pair is connected to a common terminal. Thus the two pairs of interdigitated electrodes require only three terminals to be operated. The two pairs of interdigitated electrodes are arranged so that the electrodes are substantially identical about a centre line 1044. The spacing between adjacent electrodes of each pair of interdigitated electrodes decreases in a direction away from the centre line 1044.

As such, a droplet on the top surface of the device 1010 of Figure 20A would be caused to move along one of the directions indicated in Figure 10A, depending on which side of the centre line 1044 it was initially disposed. Both pairs of interdigitated electrodes may be permanently energised, thus negating the requirement for any control system for switching interdigitated electrode pairs on or off.

Figure 20B shows three images (insets 1 to 3) that show two droplets being caused to move along the top surface of the device 1010 of Figure 20A along the direction indicated by the arrow.

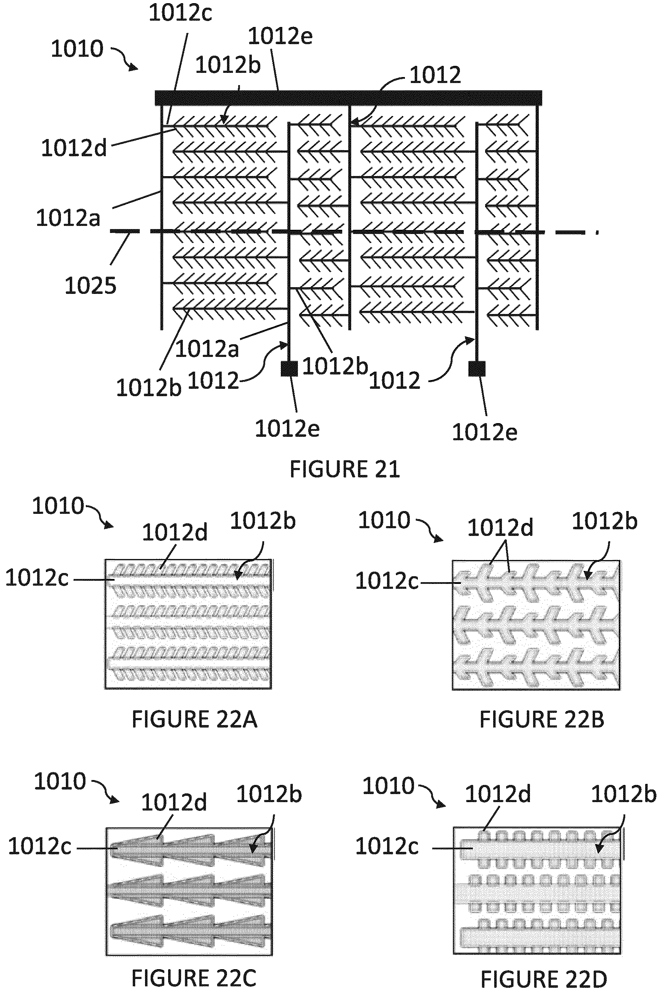

Figure 21 shows a schematic overview of a plurality of electrodes 1012 of a device 1010 according to an embodiment of the present invention. Each electrode 1012 comprises a root 1012a, a plurality of branches 1012b that each extend from the root 1012a. Each branch 1012b comprises a main branch 1012c and a plurality of sub-branches 1012d that each extend from each of the main branches 1012c. Each electrode 1012 additionally includes an electrode pad 1012e (or terminal) that is greater in area relative to adjacent areas of the respective electrode 1012. The electrode pad 1012e may be used to electrically connect the electrode to a source of electrical energy so as to apply a potential difference. In the non-limiting embodiment shown in Figure 21, some electrodes 1012 (every alternate one) shares a common electrode pad 1012e. In alternative embodiments, each electrode 1012 may comprise an individual electrode pad 1012e. Also in the non-limiting embodiment shown in Figure 21, certain ones of the electrodes 1012 include branches 1012b that extend from opposite sides of the respective root 1012a. In the particular embodiment shown, the branches 1012b extending from one side of the respective root 1012a are of a different length to the branches 1012b extending from the other side of the root 1012a. In alternative embodiments, branches 1012b extending from both sides of a root 1012a may be of substantially equal length.

The electrodes 1012 are arranged in pairs so that the plurality of branches 1012b of a first electrode 1012 are interdigitated with the plurality of branches 1012b of a second, adjacent electrode 1012 of the pair. Thus, the two adjacent electrodes 1012 form an interdigitated electrode pair. As noted above, in some embodiments, a single electrode pad 1012e may serve as a common electrode to two or more of the electrodes 1012 so that not all pairs comprise unique electrode pads 1012e.

The non-limiting embodiment of Figure 21 additionally shows an arrangement in which the root 1012a of the first electrode 1012 of each interdigitated electrode pair is substantially parallel to the root 1012a of the second electrode 1012 of the interdigitated electrode pair. Furthermore, each of the plurality of branches 1012b extends substantially perpendicularly from the respective root 1012a along a longitudinal axis 1025. Each of the plurality of sub-branches 1012d extends from the respective plurality of main branches 1012c at an inclined angle (i.e. an angle that is not 90°). In the embodiment of Figure 21, the sub-branches 1012d all extend from their respective main branch 1012c in the same direction relative to the longitudinal axes 1025 of the branches 1012b irrespective of which of the electrodes of the pair they belong.

Figures 22A to 22D each show a partial view of alternative electrodes of a device 1010 according to an embodiment of the invention. In particular, Figure 22A shows an arrangement that is similar to the embodiment of Figure 21, but wherein the spacing between adjacent sub-branches 1012d (of a given branch 1012b) is smaller relative to the respective spacings shown in Figure 21.

In certain embodiments, the plurality of sub-branches 1012d of each of the first and second electrodes 1012 of each interdigitated electrode pair comprise a first set of sub-branches and a second set of sub-branches, where the first set of sub-branches is not identical to the second set of sub-branches. For example, in the embodiment shown in Figure 22B, a first set of sub-branches 1012d comprise longer sub-branches 1012d than a second set of sub-branches and individual ones of the first set are alternately arranged with individual ones of the second set. For the avoidance of doubt, a "longer" sub-branch 1012d extends further from the respective main branch 1012c relative to a "shorter" sub-branch 1012d.

Figure 22C shows an embodiment in which the sub-branches 1012d are substantially wedge-shaped (i.e. generally triangular) and extend from the respective main branches 1012c to form a saw-tooth profile.

In the embodiment of Figure 22D, the plurality of sub-branches 1012d extend substantially perpendicularly from the respective plurality of main branches 1012c. Moreover, each of the plurality of sub-branches 1012d of the first electrode of each interdigitated electrode pair has a longitudinal axis that is not coincident with a longitudinal axis of each of the plurality of sub-branches 1012d of the second electrode of the interdigitated electrode pair. To state this another way, the plurality of sub-branches 1012d of the first electrode of each interdigitated electrode pair are not aligned with the plurality of sub-branches 1012d of the second electrode of the interdigitated electrode pair along an axis that is perpendicular to the longitudinal axes 1025 along which the branches 1012b extend.

In each of the embodiments of Figures 21 and 22A to 22D, the spacing between adjacent branches 1012b of the interdigitated electrode pairs varies along a direction parallel to that respective longitudinal axis 1025 of each branch 1012b due to the geometries of the main branches 1012c and the sub-branches 1012d. The geometrical arrangements of the electrodes shown in Figures 21 and 22A to 22D serve to enhance the local electric fields generated by the electrodes 1012. As a result, lower operating voltages may be required to produce the desired electric field at the top surface of the device 1010.

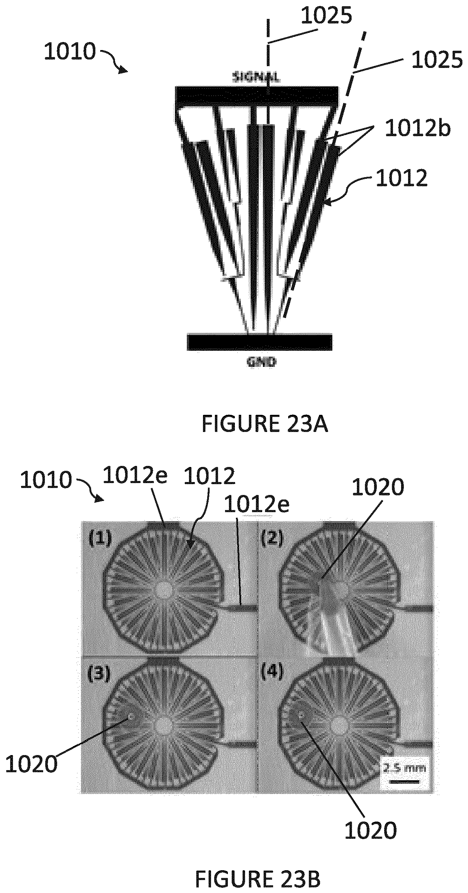

Figure 23A shows an alternative arrangement of a pair of electrodes 1012 of a device 1010 according to an embodiment of the present invention. Whilst not all longitudinal axes 1025 are indicated in Figure 23A, it can be seen that not all longitudinal axes 1025 of the electrode branches are parallel to one another Instead, some longitudinal axes 1025 are inclined relative to others. Pairs of adjacent electrode branches 1012b (from different ones of the pair of electrodes 1012) have longitudinal axes 1025 that are parallel to one another, whilst an adjacent pair of adjacent electrode branches 1012b have longitudinal axes 1025 that are parallel to one another, but that are inclined with respect to the adjacent pair of adjacent electrode branches 1012b. Some of the electrode branches 1012b additionally vary in length relative to other electrode branches 1012b in order to be accommodated by surrounding electrode branches 1012b. As with certain embodiments described above (e.g. the embodiment described with reference to Figure 12), adjacent branches 1012B of the interdigitated electrode pair are spaced from one another in a direction that is perpendicular to the respective longitudinal axis 1025 of one of the adjacent branches, and the spacing varies along a direction parallel to that respective longitudinal axis 1025.

The arrangement of electrodes 1012 shown in Figure 23A may be repeated to form a circular device 1010 such as the one shown in Figure 23B. Figure 23B shows a device 1010 having a pair of electrodes arranged circularly around a common point. Since there are only two electrodes 1012 (albeit with many branches), only two electrode pads (terminals) 1012e are required. As such, the two electrodes 1012 may be permanently energised such that no control system (or at least a simpler control system) may be required. Insets 1 to 4 show the effect of the device 1010 of Figure 23A on a droplet 1020 of water that contains contaminants (inset 1 shows no droplet 1020 present). Insets 2 to 3 show that the droplet 1020 is progressively caused to move radially outward from the centre of the device 1010.

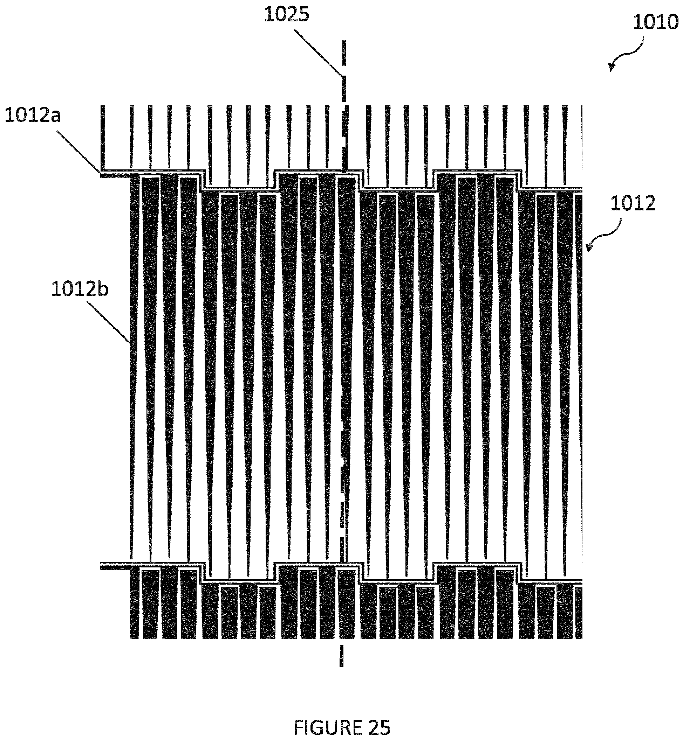

A device 1010 in accordance with an alternative embodiment of the present invention is shown in Figure 25. The roots 1012a of the electrodes follow a stepped profile such that the branches 1012b extend by varying amounts relative to one another As a result, along a direction that is perpendicular to the longitudinal axis 1025 of the branches 1012b, the branches 1012b of successive electrodes 1012 are intersected. This overlap may facilitate improved actuation of the device 1010 since a droplet may be moved to the area of overlap when one pair of electrodes is energised, and may subsequently be manipulated by the next pair of electrodes when they are actuated and the previous pair of electrodes is switched off.

In any embodiment, the electrodes may be energised with either an AC signal or a DC signal. Certain applications of the invention require (or perform more effectively with) an AC signal. In certain embodiments, it is found that AC signals provide a deeper penetration of electric field into a substance disposed on the top surface of the device, thus enhancing the ability of the device to manipulate that substance. The use of DC signals, however, offers the ability to utilise simpler control system.

In embodiments utilising AC signals, the frequency of the signal may be selectable and/or continuously controllable. The frequency of the signal may be selected based on the composition of the likely substance that the device will be used to manipulate. For example, a particular frequency or frequency range may be selected if the substance to be manipulated is a water droplet. A different frequency or frequency range may be selected if the substance to be manipulated is a droplet of blood, e.g. if the device formed part of a medical device that required the movement of blood droplets. In certain embodiments, the device may utilise several frequencies, e.g. in succession. Such embodiments may be effective if the composition of the substance to be manipulated is unknown, where the substance is manipulated as desired by one of the several frequencies. In certain embodiments, the frequencies used may be generated randomly, e.g. from a given subset. In certain non-limiting embodiments, an AC voltage having a frequency 250 kHz or less may be used (e.g. for dielectrowetting applications). In other embodiments, an AC voltage between 0.1 kHz and 2.5 kHz may be used (e.g. for electrowetting applications. The optimum frequency for a particular liquid may be determined by preliminary experimentation. For example, an optimum frequency of between 0.1 kHz and 2.5 kHz was found to be most suitable for manipulating rain droplets with contaminants such as mud, dust, etc.

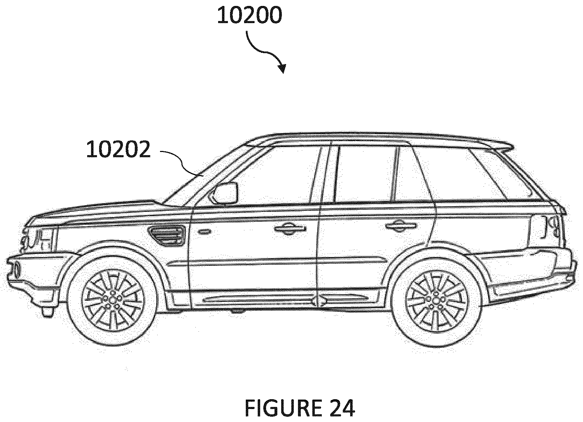

Figure 24 shows a vehicle 10200 according to an embodiment of the present invention. The vehicle 10200 may incorporate any of the devices described above and/or any component that is controlled according to the methods described above. For example, a windscreen 10202 of the vehicle 10200 may include any of the devices described above such that liquid droplets may be caused to move to a specified region of the windscreen (e.g. an edge). Devices according to embodiments of the invention might be particularly beneficial when disposed on or in the areas of the windscreen that are not wiped by the windscreen wipers of the vehicle. In alternative embodiments, other components such as substantially translucent materials of the vehicle may incorporate the above-described devices and/or be controlled according to the above-described methods. Devices according to embodiments of the invention might also be incorporated into larger devices and components such as sensors, cameras, or optical components of such devices.

In alternative embodiments, the device described above may be used to manipulate substances in a manner other than that depicted in Figures 15A to 15D, for example (i.e. other than transporting liquid droplets along the top surface). For example the substance that is to be manipulated may be a solid (e.g. ice). Devices and/or methods according to embodiments of the present invention may be used to cause melting or sublimation of the solid substance. Such an operation may be achieved by selecting the frequency at which the voltage is applied to the electrode pairs to be one that causes heating of the substance. Alternatively, devices and/or methods according to embodiments of the present invention may be used to spread a liquid substance (that may initially, for example, be in droplet form) over the top surface.

It will be appreciated that embodiments of the present invention can be realised in the form of hardware, software or a combination of hardware and software.

Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive and combinations that are not covered by the appended claims.

Each feature disclosed in this specification (including any accompanying claims, abstract and drawings), may be replaced by alternative features serving the same, equivalent or similar purpose, unless expressly stated otherwise, provided that said alternative features are covered by the appended claims.

Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed, provided that said combination is covered by the appended claims.

The claims should not be construed to cover merely the foregoing embodiments, but also any embodiments which fall within the scope of the claims.

## Claims

1. A device (1010) for moving a droplet, the device comprising:
at least three series of interdigitated electrode pairs (1012A, 1012B, 1012C), wherein an interdigitated electrode pair consists of two adjacent electrodes (1012), each electrode (1012) comprising a root (1012a) and a plurality of branches (1012b) that each extend from the root (1012a), the plurality of branches (1012b) of one electrode of the pair being interdigitated with the plurality of branches (1012b) of the other electrode of the pair, wherein a series of interdigitated electrode pairs comprises a plurality of interdigitated electrode pairs, wherein in each series each electrode of each pair is connected to an electrode in an adjacent pair in the same series by an electrical path (1042); and
a dielectric layer (1015) disposed on the at least three series of interdigitated electrode pairs, the dielectric layer comprising one or more sub layers (1014, 1016);
wherein the at least three series of interdigitated electrode pairs are selectively and independently energisable to produce an electric field at a top surface (1015a) of the dielectric layer so that a droplet on the top surface may be caused to move by the electric field
wherein said at least three series of interdigitated electrode pairs are arranged into one or more groups of interdigitated electrode pairs, each group having a longitudinal axis (1040), wherein in each group the respective interdigitated electrode pairs are arranged along the respective longitudinal axis such that along the respective longitudinal axis no two adjacent pairs are from a single one of the at least three series, and no pair is adjacent to two other pairs from a single one of the at least three series

2. A device according to claim 1, wherein the at least three series of interdigitated electrode pairs consists of only three series of interdigitated electrode pairs.

3. A device according to claim 1 or 2, wherein each electrode of each pair has a length that is 15 mm or less, 10 mm or less, or 5 mm or less.

4. A device according to any preceding claim, comprising a plurality of groups wherein the longitudinal axes of at least some of the plurality of groups radiate out from a common point.

5. A device according to claim 4, wherein consecutive interdigitated electrode pairs along each longitudinal axis increase in size in a direction away from the common point.

6. A device according to claim 5, wherein the lengths of the consecutive interdigitated electrode pairs increase in size in a direction away from the common point.

7. A device according to claim 5 or 6, wherein the widths of the consecutive interdigitated electrode pairs increase in size in a direction away from the common point.

8. A device according to any preceding claim, wherein all of the interdigitated electrode pairs and electrical paths are in the same plane as one another

9. A device according to any preceding claim, wherein one electrode of each pair is connected to a common ground terminal.

10. A device according to any preceding claim, wherein each electrode of each of the one or more interdigitated electrode pairs comprises a root and a plurality of branches that each extend from the root along a respective longitudinal axis, wherein the plurality of branches of one electrode of the pair are interdigitated with the plurality of branches of the other electrode of the pair; wherein adjacent branches of each of the interdigitated electrode pairs are spaced from one another in a direction that is perpendicular to the respective longitudinal axis of one of the adjacent branches, and the spacing varies along a direction parallel to that respective longitudinal axis.

11. A device according to claim 10, wherein the spacing decreases along the direction parallel to the respective longitudinal axis.

12. A device according to claim 11, wherein the spacing decreases at a substantially constant rate along the direction parallel to the respective longitudinal axis.

13. A vehicle comprising one or more devices according to any preceding claim.

14. An assembly comprising a substantially translucent material having one or more devices according to any of claims 1 to 12 embedded therein or affixed thereto, wherein optionally the substantially translucent material comprises a vehicle windscreen or an optical component.

15. A method of using a device according to any preceding claim, comprising selectively and independently energising the at least three series of interdigitated electrode pairs to produce an electric field at a top surface of the dielectric layer so that a substance on the top surface may be manipulated by the electric field.

## Patentansprüche

1. Vorrichtung (1010) zum Bewegen eines Tröpfchens, die Vorrichtung umfassend:
mindestens drei Reihen von ineinandergreifenden Elektrodenpaaren (1012A, 1012B, 1012C), wobei ein ineinandergreifendes Elektrodenpaar aus zwei benachbarten Elektroden (1012) besteht, wobei jede Elektrode (1012) eine Wurzel (1012a) und eine Vielzahl von Zweigen (1012b) umfasst, die sich jeweils von der Wurzel (1012a) erstrecken, wobei die Vielzahl von Zweigen (1012b) einer Elektrode des Paares mit der Vielzahl von Zweigen (1012b) der anderen Elektrode des Paares ineinandergreift, wobei eine Reihe von ineinandergreifenden Elektrodenpaaren eine Vielzahl von ineinandergreifenden Elektrodenpaaren umfasst, wobei in jeder Reihe jede Elektrode jedes Paares mit einer Elektrode in einem benachbarten Paar in derselben Reihe durch einen elektrischen Pfad (1042) verbunden ist; und
eine dielektrische Schicht (1015), die auf den mindestens drei Reihen von ineinandergreifenden Elektrodenpaaren angeordnet ist, wobei die dielektrische Schicht eine oder mehrere Teilschichten (1014, 1016) umfasst;
wobei die mindestens drei Reihen von ineinandergreifenden Elektrodenpaaren selektiv und unabhängig voneinander erregbar sind, um ein elektrisches Feld an einer oberen Oberfläche (1015a) der dielektrischen Schicht zu erzeugen, sodass ein Tröpfchen auf der oberen Oberfläche durch das elektrische Feld dazu veranlasst werden kann, sich zu bewegen,
wobei die mindestens drei Reihen von ineinandergreifenden Elektrodenpaaren in einer oder mehreren Gruppen von ineinandergreifenden Elektrodenpaaren angeordnet sind, wobei jede Gruppe eine Längsachse (1040) aufweist, wobei in jeder Gruppe die jeweiligen ineinandergreifenden Elektrodenpaare entlang der jeweiligen Längsachse so angeordnet sind, dass entlang der jeweiligen Längsachse keine zwei benachbarten Paare aus einer einzigen der mindestens drei Reihen stammen und kein Paar benachbart zu zwei anderen Paaren aus einer einzigen der mindestens drei Reihen ist.

2. Vorrichtung nach Anspruch 1, wobei die mindestens drei Reihen von ineinandergreifenden Elektrodenpaaren aus nur drei Reihen von ineinandergreifenden Elektrodenpaaren bestehen.

3. Vorrichtung nach Anspruch 1 oder 2, wobei jede Elektrode jedes Paares eine Länge aufweist, die 15 mm oder weniger, 10 mm oder weniger oder 5 mm oder weniger beträgt.

4. Vorrichtung nach einem der vorstehenden Ansprüche, umfassend eine Vielzahl von Gruppen, wobei die Längsachsen von mindestens einigen der Vielzahl von Gruppen von einem gemeinsamen Punkt ausgehen.

5. Vorrichtung nach Anspruch 4, wobei aufeinanderfolgende ineinandergreifende Elektrodenpaare entlang jeder Längsachse in einer Richtung weg von dem gemeinsamen Punkt an Größe zunehmen.

6. Vorrichtung nach Anspruch 5, wobei die Längen der aufeinanderfolgenden ineinandergreifenden Elektrodenpaare in einer Richtung von dem gemeinsamen Punkt weg an Größe zunehmen.

7. Vorrichtung nach Anspruch 5 oder 6, wobei die Breiten der aufeinanderfolgenden ineinandergreifenden Elektrodenpaare in einer Richtung weg von dem gemeinsamen Punkt in der Größe zunehmen.

8. Vorrichtung nach einem der vorstehenden Ansprüche, wobei alle ineinandergreifenden Elektrodenpaare und elektrischen Pfade in derselben Ebene wie einander liegen.

9. Vorrichtung nach einem der vorstehenden Ansprüche, wobei eine Elektrode jedes Paares mit einem gemeinsamen Masseanschluss verbunden ist.

10. Vorrichtung nach einem der vorstehenden Ansprüche. wobei jede Elektrode jedes von dem einen oder den mehreren ineinandergreifenden Elektrodenpaaren eine Wurzel und eine Vielzahl von Zweigen umfasst, die sich jeweils von der Wurzel entlang einer jeweiligen Längsachse erstrecken, wobei die Vielzahl von Zweigen einer Elektrode des Paares mit der Vielzahl von Zweigen der anderen Elektrode des Paares ineinandergreift; wobei benachbarte Zweige jedes der ineinandergreifenden Elektrodenpaare in einer Richtung voneinander beabstandet sind, die senkrecht zu der jeweiligen Längsachse eines der benachbarten Zweige verläuft, und der Abstand entlang einer Richtung parallel zu dieser jeweiligen Längsachse variiert.

11. Vorrichtung nach Anspruch 10, wobei der Abstand entlang der Richtung parallel zu der jeweiligen Längsachse abnimmt.

12. Vorrichtung nach Anspruch 11, wobei der Abstand mit einer im Wesentlichen konstanten Rate entlang der Richtung parallel zur jeweiligen Längsachse abnimmt.

13. Fahrzeug, umfassend eine oder mehrere Vorrichtungen nach einem der vorstehenden Ansprüche.

14. Baugruppe, umfassend ein im Wesentlichen lichtdurchlässiges Material mit einer oder mehreren darin eingebetteten oder daran befestigten Vorrichtungen nach einem der Ansprüche 1 bis 12, wobei optional das im Wesentlichen lichtdurchlässige Material eine Fahrzeugwindschutzscheibe oder eine optische Komponente umfasst.

15. Verfahren zur Verwendung einer Vorrichtung nach einem der vorstehenden Ansprüche, umfassend das selektive und unabhängig voneinander erfolgende Erregen der mindestens drei Reihen von ineinandergreifenden Elektrodenpaaren, um ein elektrisches Feld an einer oberen Oberfläche der dielektrischen Schicht zu erzeugen, sodass eine Substanz auf der oberen Oberfläche durch das elektrische Feld manipuliert werden kann.

## Revendications

1. Dispositif (1010) permettant de déplacer une gouttelette, le dispositif comprenant :
au moins trois séries de paires d'électrodes interdigitées (1012A, 1012B, 1012C), dans lequel une paire d'électrodes interdigitées est constituée de deux électrodes adjacentes (1012), chaque électrode (1012) comprenant une racine (1012a) et une pluralité de branches (1012b) qui s'étendent chacune à partir de la racine (1012a), la pluralité de branches (1012b) d'une électrode de la paire étant interdigitée avec la pluralité de branches (1012b) de l'autre électrode de la paire, dans lequel une série de paires d'électrodes interdigitées comprend une pluralité de paires d'électrodes interdigitées, dans lequel dans chaque série chaque électrode de chaque paire est connectée à une électrode dans une paire adjacente dans la même série par un chemin électrique (1042) ; et
une couche diélectrique (1015) disposée sur les au moins trois séries de paires d'électrodes interdigitées, la couche diélectrique comprenant une ou plusieurs sous-couches (1014, 1016) ;
dans lequel les au moins trois séries de paires d'électrodes interdigitées sont sélectivement et indépendamment excitables pour produire un champ électrique au niveau d'une surface supérieure (1015a) de la couche diélectrique de sorte qu'une gouttelette sur la surface supérieure peut être amenée à se déplacer par le champ électrique
dans lequel lesdites au moins trois séries de paires d'électrodes interdigitées sont agencées en un ou plusieurs groupes de paires d'électrodes interdigitées, chaque groupe présentant un axe longitudinal (1040), dans lequel, dans chaque groupe, les paires d'électrodes interdigitées respectives sont agencées le long de l'axe longitudinal respectif de telle sorte que, le long de l'axe longitudinal respectif, aucune des deux paires adjacentes ne provienne d'une seule série parmi les au moins trois séries, et qu'aucune paire n'est adjacente à deux autres paires provenant d'une seule des au moins trois séries.

2. Dispositif selon la revendication 1, dans lequel les au moins trois séries de paires d'électrodes interdigitées sont constituées de seulement trois séries de paires d'électrodes interdigitées.

3. Dispositif selon la revendication 1 ou 2, dans lequel chaque électrode de chaque paire présente une longueur de 15 mm ou moins, 10 mm ou moins, ou 5 mm ou moins.

4. Dispositif selon l'une quelconque revendication précédente, comprenant une pluralité de groupes dans lequel les axes longitudinaux d'au moins certains de la pluralité de groupes rayonnent à partir d'un point commun.

5. Dispositif selon la revendication 4, dans lequel des paires d'électrodes interdigitées consécutives le long de chaque axe longitudinal augmentent de taille dans une direction s'éloignant du point commun.

6. Dispositif selon la revendication 5, dans lequel les longueurs des paires d'électrodes interdigitées consécutives augmentent de taille dans une direction s'éloignant du point commun.

7. Dispositif selon la revendication 5 ou 6, dans lequel les largeurs des paires d'électrodes interdigitées consécutives augmentent de taille dans une direction s'éloignant du point commun.

8. Dispositif selon l'une quelconque revendication précédente, dans lequel toutes les paires d'électrodes interdigitées et tous les chemins électriques se trouvent dans le même plan les uns par rapport aux autres.

9. Dispositif selon l'une quelconque revendication précédente, dans lequel une électrode de chaque paire est connectée à une borne de masse commune.

10. Dispositif selon l'une quelconque des revendications précédentes, dans lequel chaque électrode de chacune de la ou des paires d'électrodes interdigitées comprend une racine et une pluralité de branches qui s'étendent chacune à partir de la racine le long d'un axe longitudinal respectif, dans lequel la pluralité de branches d'une électrode de la paire est interdigitée avec la pluralité de branches de l'autre électrode de la paire ; dans lequel des branches adjacentes de chacune des paires d'électrodes interdigitées sont espacées les unes des autres dans une direction qui est perpendiculaire à l'axe longitudinal respectif de l'une des branches adjacentes, et l'espacement varie le long d'une direction parallèle à cet axe longitudinal respectif.

11. Dispositif selon la revendication 10, dans lequel l'espacement diminue le long de la direction parallèle à l'axe longitudinal respectif.

12. Dispositif selon la revendication 11, dans lequel l'espacement diminue à un taux sensiblement constant le long de la direction parallèle à l'axe longitudinal respectif.

13. Véhicule comprenant un ou plusieurs dispositifs selon l'une quelconque revendication précédente.

14. Ensemble comprenant un matériau sensiblement translucide présentant un ou plusieurs dispositifs selon l'une quelconque des revendications 1 à 12 qui y sont incorporés ou fixés, dans lequel éventuellement le matériau sensiblement translucide comprend un pare-brise de véhicule ou un composant optique.

15. Procédé d'utilisation d'un dispositif selon l'une quelconque revendication précédente, comprenant l'excitation sélective et indépendante des au moins trois séries de paires d'électrodes interdigitées pour produire un champ électrique au niveau d'une surface supérieure de la couche diélectrique de sorte qu'une substance sur la surface supérieure peut être manipulée par le champ électrique.
